# EUROPÄISCHE PATENTSCHRIFT

(11) **EP 1 361 930 B1**
(45) Veröffentlichungstag und Bekanntmachung des Hinweises auf die Patenterteilung: **13.10.2004**
(21) Anmeldenummer: 02710031.2
(22) Anmeldetag: 25.01.2002
(51) Int. Cl.: B21B 1/46, B21B 15/00, B21B 39/00, B21B 39/14, B21B 45/00, C21D 9/00, F27B 9/30, F27D 3/00, B23K 7/00

(54) **STRANGGIESSANLAGE MIT NACHGEORDNETEN ÖFEN, VORWALZGERÜSTEN SOWIE EINER FERTIGSTRASSE**
CONTINUOUS CASTING UNIT WITH POST-ARRANGED FURNACE, ROUGHING STAND AND FINISHING TRAIN
INSTALLATION DE COULEE CONTINUE EQUIPEE D'UN FOUR, D'UNE CAGE DEGROSSISSEUSE ET D'UN TRAIN FINISSEUR PLACES EN AVAL

(30) Priorität: 24.02.2001 DE 10109055
(43) Veröffentlichungstag der Anmeldung: 19.11.2003
(73) Patentinhaber: SMS Demag Aktiengesellschaft, 40237 Düsseldorf (DE)
(72) Erfinder: SUDAU, Peter, 57271 Hilchenbach (DE); BÄUMER, Klaus, 57223 Kreuztal (DE); MÜLLER, Karl-Friedrich, 57339 Erndtebrück (DE)
(74) Vertreter: Valentin, Ekkehard
(86) Internationale Anmeldenummer: PCT/EP2002/000751
(87) Internationale Veröffentlichungsnummer: WO 2002/068138

(56) Entgegenhaltungen:
- EP-A- 0 297 491
- EP-A- 0 426 576
- DE-A- 4 220 424
- US-A- 1 910 267
- BEVERLEY I ET AL: "BENEFITS OF HEAT CONSERVATION PANELS ON BRITISH STEEL'S RAVENSCRAIG HOT STRIP MILL" IRON AND STEEL ENGINEER, ASSOCIATION OF IRON AND STEEL ENGINEERS. PITTSBURGH, US, Bd. 69, Nr. 2, 1. Februar 1992 (1992-02-01), Seiten 40-48, XP000262118 ISSN: 0021-1559
- BROVMAN M YA ET AL: "SECTION FOR OXYGEN CUTTING OF OFF-GRADE PRODUCT ON HOT STRIP MILL" STEEL IN THE USSR, METALS SOCIETY. LONDON, GB, Bd. 20, Nr. 12, 1. Dezember 1990 (1990-12-01), Seiten 589-591, XP000263492
- DATABASE WPI Section Ch, Derwent Publications Ltd., London, GB; Class M21, AN 1973-67189U XP002199736 -& JP 48 035149 B (HITACHI LTD), 26. Oktober 1973 (1973-10-26)
- PATENT ABSTRACTS OF JAPAN vol. 008, no. 212 (C-244), 27. September 1984 (1984-09-27) -& JP 59 100212 A (SHIN NIPPON SEITETSU KK), 9. Juni 1984 (1984-06-09)

## Beschreibung

Die Erfindung betrifft eine Warmwalzanlage, bestehend aus mindestens einer Stranggießanlage mit nachgeordnetem Ofen, dem ein Vorwalzgerüst und über eine Bandseitenführung ein Tunnelofen sowie eine Fertigstraße folgen.

Eine derartige Warmwalzanlage hat sich grundsätzlich bewährt. Es hat sich allerdings gezeigt, daß in einem Störfall, sei er materialbedingt oder durch die Anlage gegeben, die gewünschten Eingriffe zur Wiederherstellung des Normalbetriebes nicht leicht und insbesondere nicht schnell genug durchführbar sind, so daß in einem solchen Falle bspw. der Gießvorgang abgebrochen werden muß. Die Neuaufnahme des Walzprozesses ist somit nur mit erheblichem zusätzlichen Zeitaufwand möglich.

Des weiteren kann erwünscht sein, sowohl im Störfall als auch im Normalbetrieb der Anlage Vorbandmaterial zu entnehmen.

Die Erfindung geht daher von der Aufgabe aus, Störfälle auf ein Mindestmaß zu reduzieren, und sowohl im Störfall als auch bei gewünschter Entnahme von Vorbandmaterial das hinter dem Vorgerüst im Tunnelofen anstehende Vorband aus dem normalen Walzgang auszuscheiden.

Gelöst wird diese Aufgabe mit den Merkmalen des Patentanspruchs 1. Die verlängerte Bandseitenführung schützt den zweiten Ofen vor Beschädigungen durch säbelförmig verlaufendes Vorband, und eine Vorerkennung ist durch die Beobachtung der Kanten des Vorbandes möglich. Die Entnahme von Vorband aus dem zweiten Ofen kann mittels dessen aufschwenkbarer Abdeckung bewirkt werden, wobei zweckmäßig diese Abdeckung eine Unterteilung in der Längsrichtung des zweiten Ofens erfährt, so daß zu entnehmendes Vorband nicht mit seiner Gesamtlänge, sondern nur in einer Teillänge zu erfassen ist. Entsprechend werden seitliche, in den Ofen einschiebbare Austragvorrichtung und Querteilvorrichtung vorgesehen, die seitlich neben diesem verfahrbar sind. Insbesondere wenn den die Brammenkantenlage ermittelnden Vorrichtungen eine Notschaltvorrichtung bzw. Notschnitte auslösende Vorrichtung zugeordnet ist, läßt sich beim Erfassen überstarker Säbel ein Notschneiden der Brammen bzw. der Vorbänder vor und im Ofen einleiten.

Vorteilhafte, zweckmäßige und gegebenenfalls erfinderische Weiterbildungen der Erfindung sind den Unteransprüchen zu entnehmen.

Im einzelnen wird die Erfindung anhand der Beschreibung eines Ausführungsbeispieles in Verbindung mit dieses darstellenden Zeichnungen erläutert.

Es zeigen hierbei:
- Figur 1: schematisch in einer Seitenansicht die Walzanlage,
- Figur 2: eine Aufsicht auf das Vorwalzgerüst, den zweiten Tunnelofen mit einem Gerüst und Tunnelofen verbindenden Rollgang, eine dem Tunnelofen zugeordnete Austragvorrichtung sowie Querteilvorrichtung und eine dem Ofen nachgeordnete, der Fertigstraße vorgeordnete Schere,
- Figur 3: bei geschnittenem Tunnelofen mit angehobener Abdeckung in der Seitenansicht die in Fig. 2 als Querteileinrichtung vorgesehene Brennschneideinrichtung,
- Figur 4: in der Fig. 3 entsprechenden Darstellung die Ansicht der als Hubbalken-Transportvorrichtung ausgebildete Austragvorrichtung der Fig. 2, und
- Figur 5: eine Aufsicht auf die Hubbalken-Transportvorrichtung der Fig. 4.

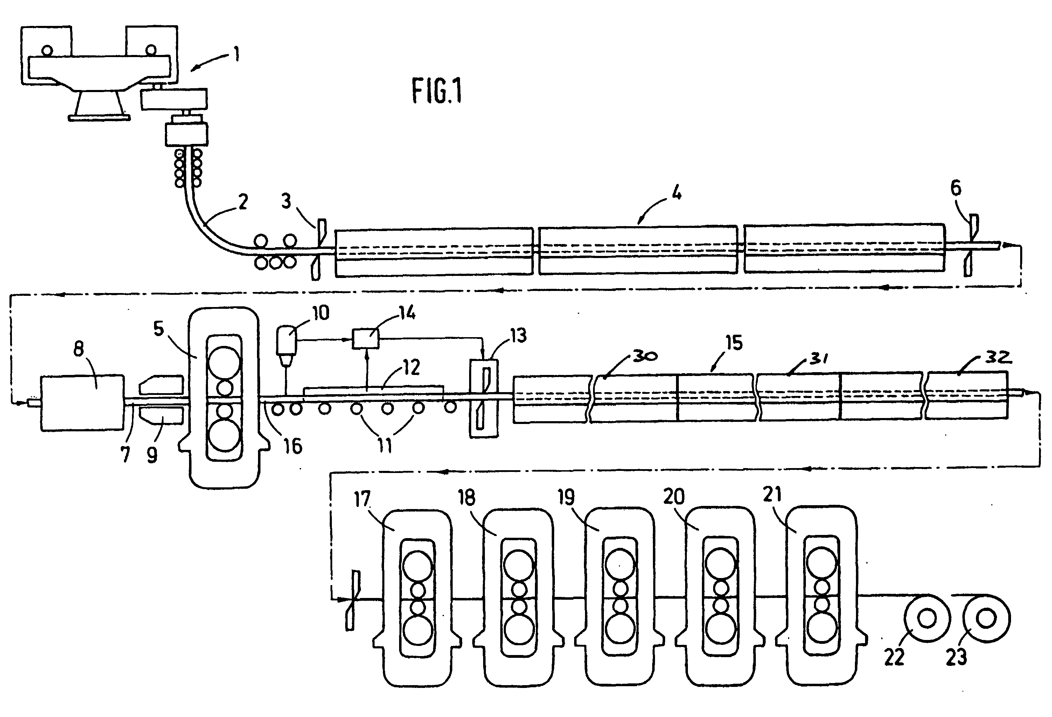

In der Fig. 1 ist ein Warmwalzwerk schematisch-perspektivisch dargestellt. Von einer Stranggießanlage 1 wird kontinuierliche eine Bramme 2 abgegeben, die vermittels einer Schere 3 in Stücke vorgegebener Maximallänge unterteil wird. Diese unterteilten Brammen 7 werden über einen ersten Ofen 4 einem Vorgerüst 5 zugeführt. Im Ausführungsbeispiel beträgt die Maximalstärke der Brammen 80 mm, und die Breite kann von 900 mm bis 1680 mm eingestellt werden. Die endlose Bramme 2 wird in Abschnitte von maximal 38 m Länge unterteilt.

Dem Ofen 4 kann eine weitere Schere 6 nachgeordnet werden. Die Brammen 7 durchlaufen sodann eine Entzunderungsvorrichtung 8 sowie eine Profilmeßeinrichtung 9. Diese erlaubt es, unsymmetrische Profile der Brammen 7 zu erkennen und bspw. durch geringfügiges vertikales Schränken der Arbeitswalzen des Vorgerüstes 5 eine gleichbleibende Längung der Bramme 7 über ihre ganze Breite zu erreichen und damit Säbelbildungen praktisch zu vermeiden.

Dem Vorgerüst 5 nachgeordnet ist ein Bandkanten-Indikator 10, der nach Art einer Kamera ausgebildet sein kann. Der Zwischenraum zwischen dem Vorgerüst 5 und dem folgenden zweiten Tunnelofen 15 ist durch einen Übergangs-Rollgang 11 überbrückt, der länger als bisher üblich ausgebildet ist, und in dessen Bereich Führungslineale 12 für das Vorband 16 angeordnet sind. Diese Führungslineale sind mit bspw. 4 m Länge wesentlich länger ausgebildet als die bisher üblichen, und sie werden je nach Breite des Vorbandes 16 so eingestellt, daß sie bspw. mit der Bandkante jeweils eine lichte Weite von 10 mm einschließen. Das bedeutet, daß bei ordnungsgemäß durchlaufendem Vorband jeder Verschleiß vermieden wird, beim Bilden eines Säbels oder bei seitlichen Verschiebungen des Vorbandes jedoch auf das Vorband höhere Seitenkräfte ausgeübt werden können als es bisher üblich war, wobei die von den Führungslinealen 12 hierbei aufgenommenen Kräfte jedoch geringer sind als bei den bisher üblichen, kürzeren Führungslinealen.

Nach dem Verlassen des zweiten Tunnelofens 15 läuft das Vorband 16 in die aus Gerüsten 17 bis 21 bestehende Fertigstraße ein, die das bspw. auf 35 mm herabgewalzte Vorband 16 auf 20 mm bis 1 mm herabwalzen. Das fertig gewalzte Band wird von Bandwicklem 22 bzw. 23 aufgenommen.

Beabsichtigte Matehalentnahmen werden im zweiten Tunnelofen 15 durchgeführt, und auch beim Verlaufen zu starker Säbel erfolgt hier eine Unterteilung und sofortige Abführung des Vorbandes 16, so daß der Betrieb praktisch nicht gestört wird und das Gießen der endlosen Brammen 2 praktisch kontinuierlich weitergeführt werden kann.

Es sei nochmals vermerkt, daß durch die Profilmeßeinrichtung 9 das Profil der Brammen 7 festgestellt wird, so daß durch Schränken bzw. unsymmetrische Anstellung der Arbeitswalzen des Vorgerüstes 5 bereits ein gleichmäßig gelängtes Vorband ohne Tendenz zu Krümmungen erreicht wird. Überwacht wird dieses bereits vor dem Eintreten in den zweiten Tunnelofen 15 sowohl durch den Bandkanten-Indikator 10 als auch durch die eventuelle Beaufschlagung der Führungslineale 12, die durch entsprechende Fühler ermittelt wird. Wird durch den Bandkanten-Indikator 10 und/oder die Belastung der Führungslineale 12 ein seitliches Auslaufen bzw. eine Säbelbildung des vom Vorgerüst 5 abgegebenen Vorbandes 16 festgestellt, so werden die Meßergebnisse der Auswertvorrichtung 14 zugeleitet, die bereits am Eingang des zweiten Tunnelofens 15 eine Querteileinrichtung 13 in Betrieb setzen kann.

Im übrigen sind auch mehrere weitere Bandkanten-Indikatoren im zweiten Tunnelofen 15 angeordnet, so daß auch ein seitliches Verlaufen innerhalb des Ofens noch festgestellt wird und entsprechende Notmaßnahmen ausgelöst werden können.

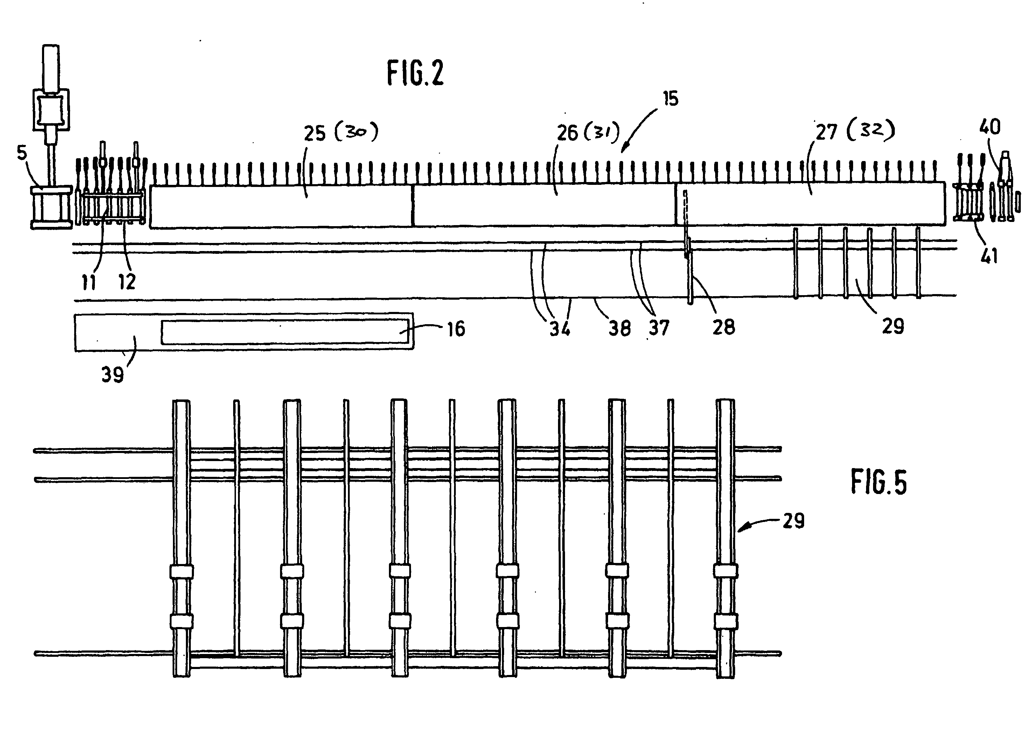

Wie Fig. 2 andeutet, ist der zweite Tunnelofen 15 in drei Ofensektoren 25 bis 27 unterteilt. Die Abdeckungen dieser Sektoren sind getrennt und unabhängig voneinander zum Aufteilen des Vorbandes und/oder zur Entnahme von Vorband-Teilen eingerichtet. Fig. 2 zeigt hierzu eine als Brennschneideinrichtung ausgebildete Querteilvorrichtung 28 sowie eine mittels Hubbalken wirksame Austragvorrichtung 29, die beide entlang der Länge des Ofens über Schienen verfahrbar sind.

Die Unterteilung des zweiten Tunnelofens 15 in drei Ofensektoren 25 bis 27 und die Aufteilung des Ofenoberteiles in drei separat bedienbare und aufschwenkbare Abdeckungs-Segmente 30 bis 32 erlauben es, nur jeweils eines der Abdeckungs-Segmente 30 bis 32 aufwärts zu schwenken und damit den Ofen nur entlang dieses Segmentes zu öffnen, so daß der Wärmeverlust und der diesem entsprechende Energieaufwand begrenzt bleiben. Die längs des Ofens verfahrbare Austragvorrichtung 29 gestattet es, aus jedem der drei Segmente Vorbandmaterial zu entnehmen, wobei die beiden weiteren Ofenoberteile geschlossen bleiben können. Die Austragvorrichtung ist so ausgelegt, daß durch schnelle Reaktionszeit, wartungsarme sowie bedienungsfreundliche Tätigkeit ein Gießabbruch nicht erforderlich wird. Somit kann unabhängig vom gesamten Anlagenkonzept ohne Beeinflussung der übrigen Anlage und der weiteren Produktion nach Belieben Material entnommen werden.

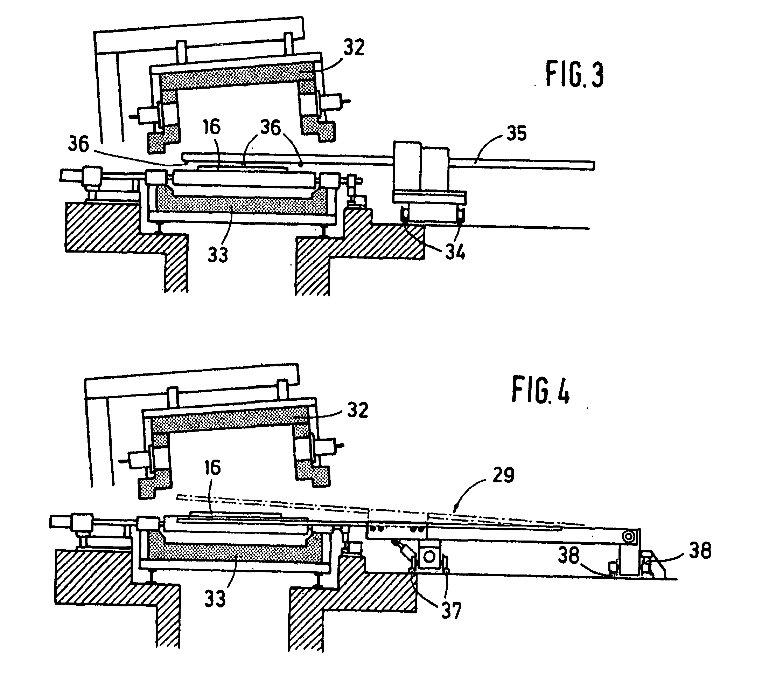

Um diese Entnahme von Vorbandmaterial zu ermöglichen, ist bei längerem Vorbandmaterial ein Unterteilen bzw. Stückeln erforderlich. Auch bei nicht einwandfreiem und/oder seitlich verlaufenden Material können Abschnitte abgetrennt und entnommen werden. In einem solchen Falle wird die Brennschneideinrichtung 28 der Fig. 2 und 3 an die beabsichtigte Trennstelle herangefahren. In Fig. 3 ist der Sockel 33 des zweiten Tunnelofens 15 gezeigt, dessen Abdeckungssegment 32 zur Entnahme von Material des Vorbandes 16 angehoben ist. Auf Laufschienen 34 war die Brennschneideinrichtung an die gewünschte Stelle gefahren, und nach Anheben des Abdeckungssegmentes 32 ist deren Traverse 35 aus der in ausgezogener Linie dargestellten Verfahrposition in die gestrichelte der Schneideposition nach links verschoben. Nach gegebenenfalls erforderlichem Absenken auf das Vorband 16 beginnt die Brennschneideinrichtung mit zwei parallel arbeitenden Brennköpfen 36 den Schneidvorgang, der nach einer Verschiebung um die halbe maximale Vorbandbreite nach rechts abgeschlossen ist.

Das Entnehmen von Vorband-Abschnitten bis zu einer maximalen Länge eines der Sektoren des zweiten Tunnelofens 15 wird mit der als Hubbalkenanordnung ausgebildeten Austragvorrichtung 29 durchgeführt, die bei geschnittenem zweiten Tunnelofen in der Seitenansicht in Fig. 4 und in der Aufsicht in Fig. 5 gezeigt ist. Auch hier ist das Abdeckungssegment 32 vom Sockel 33 des zweiten Tunnelofens 15 angehoben. Auf Schienengruppen 37 und 38 wird die Austragvorrichtung 29 an der Ofenlängsseite bis zur gewünschten Stelle gefahren und dann in den Ofen eingeschoben. Während die Schienengruppe 37 im wesentlichen das Gewicht übernimmt, zeigt die Schienengruppe 38 eine die Fahrrollen untergreifende und eine sie übergreifende Fahrbahn, so daß auch bei unterschiedlichen Belastungen der Hebel der Neigungswinkel gesichert bleibt. Mit entsprechend zyklischem Arbeiten der Hubbalken wird der untergriffene Abschnitt des Vorbandes 16 seitlich aus dem zweiten Tunnelofen 15 abschnittsweise herausgeschoben, bis die Hubbalkenabschnitte zurück und aus dem Ofen herausfahrbar sind, und nunmehr das Abdeckungssegment 32 wieder abgesenkt werden kann. Der aufgenommene Abschnitt des Vorbandes 16 kann nunmehr durch Verfahren der Hubbalkenfördereinrichtung 29 entlang der Schienengruppen 37, 38 zum Ablageplatz 39 der Fig. 2 verfahren werden, wo die Vorbandabschnitte 16 zur weiteren Verwendung bzw. zum weiteren Abtransport ablegbar sind.

Mit Hilfe dieser Austragvorrichtung läßt sich zwischen dem Vorgerüst und der Fertigstraße Vorbandmaterial dem zweiten Tunnelofen 15 entnehmen. Diese Entnahme kann aus watztechnischen, aber auch aus produktionstechnischen Gründen von Interesse sein oder durch seitliches Auslaufen des Vorbandes erforderlich werden. Als Gründe können neben anderen benannt werden:
- Bedingt durch das Vormaterial wurde ein Säbel gewalzt;
- durch nicht einheitlichen Temperaturverlauf über die Bandbreite war im Vorgerüst beim Walzen ein Säbel entstanden;
- Säbel können auch entstehen durch unterschiedliche Walzkräfte an Antriebsseite und Bedienungsseite des Gerüstes, die nicht durch Ergebnisse des Profilmessers bedingt waren;
- diverse Fehler der Bedienungsmannschaft im Bereiche des Vorgerüstes;
- technische Probleme im Bereich des Vorgerüstes;
- technische Probleme im Bereich Gießanlage bis Vorgerüst; das Material ist für die weitere Fertigung nicht geeignet;
- auch bei weiteren Problemen im Bereich der Gesamtanlage kann Material entnommen werden, um einen Gießabbruch zu verhindern;
- es kann Material entnommen werden, um in einer anderen Anlage weiterhin genutzt zu werden.

In Fig. 2 ist hinter dem Auslauf des zweiten Tunnelofens 15 und vor der Schere 40 am Einlauf der Gerüste der Fertigstraße noch ein gesonderter Einlauftrichter 41 angeordnet, der gewährleistet, daß auch Material, welches den zweiten Tunnelofen 15 nicht mittig verläßt, dennoch gut und zentrisch geführt den Gerüsten 17 bis 21 der Fertigstraße zugeleitet wird.

### Bezugszeichenübersicht

- 1: Stranggießanlage
- 2: Bramme
- 3: Schere
- 4: Ofen
- 5: Vorgerüst
- 6: Schere
- 7: Unterteilte Brammen
- 8: Entzunderungsvorrichtung
- 9: Profilmeßeinrichtung
- 10: Bandkanten-Indikator
- 11: Übergangs-Roligang
- 12: Führungslineal
- 13: Querteileinrichtung
- 14: Auswertvorrichtung
- 15: Tunnelofen
- 16: Vorband
- 17: Gerüst
- 18: Gerüst
- 19: Gerüst
- 20: Gerüst
- 21: Gerüst
- 22: Bandwickler
- 23: Bandwickler
- 25: Ofensektor
- 26: Ofensektor
- 27: Ofensektor
- 28: Querteilvorrichtung
- 29: Austragvorrichtung
- 30: Abdeckungssegment
- 31: Abdeckungssegment
- 32: Abdeckungssegment
- 33: Sockel
- 34: Laufschienen
- 35: Traverse
- 36: Brennköpfe
- 37: Schienengruppe
- 38: Schienengruppe
- 39: Ablageplatz
- 40: Schere
- 41: Einlauftrichter

## Patentansprüche

1. Warmwalzanlage, bestehend aus mindestens einer Stranggießanlage (1) mit nachgeordnetem Ofen (4), dem ein Vorwalzgerüst (5) und über eine Bandseitenführung ein Tunnelofen (15) sowie eine Fertigstraße folgen,
**dadurch gekennzeichnet,**
**daß** die Bandseitenführung eine Länge von mindestens 4 m aufweist, daß dem Tunnelofen (15) mindestens eine die Bandkantenlage erkennende Vorrichtung vor- bzw. zugeordnet ist, daß der Tunnelofen (15) mindestens ein aufschwenkbares Abdeckungssegment (30 bis 32) aufweist, daß mindestens neben dem Tunnelofen (15) eine sich in dessen Längsrichtung erstreckende Austragvorrichtung (29) verschiebbar ist, und daß den die Bandkantenlagen ermittelnden Vorrichtungen Auswertvorrichtungen (14) sowie eine Notschaltvorrichtung und/oder Notschnitte auslösende Querteilvorrichtung (28) zugeordnet ist.

2. Warmwalzanlage nach Anspruch 1,
**dadurch gekennzeichnet,**
**daß** die Bandseitenführungen Führungslineale (12) sind.

3. Warmwalzwerk nach Anspruch 1,
**dadurch gekennzeichnet,**
**daß** die Bandkantenlage ermittelnden Vorrichtungen Kameras sind.

4. Warmwalzanlage nach Anspruch 1,
**dadurch gekennzeichnet,**
**daß** die Abdeckung des Tunnelofens (15) unterteilt ist und die Abdekkungs-Segmente (30 bis 32) separat schwenkbar sind.

5. Warmwalzanlage nach Anspruch 1,
**dadurch gekennzeichnet,**
**daß** die Querteilvorrichtung (28) eine Brennschneidvorrichtung ist.

6. Warmwalzanlage nach Anspruch 1,
**dadurch gekennzeichnet,**
**daß** die Länge der Austragvorrichtung nur eine Teillänge des Tunnelofens (15) beträgt.

7. Warmwalzanlage nach einem der Ansprüche 1 bis 6,
**dadurch gekennzeichnet,**
**daß** die Querteilvorrichtung (28) und die Austragvorrichtung (29) auf Schienen (34, 37, 38) verfahrbar sind.

8. Warmwalzanlage nach einem der Ansprüche 1 bis 7,
**dadurch gekennzeichnet,**
**daß** die Querteilvorrichtung (28) an vorgebbaren Einsatzorten positionierbar ist.

9. Warmwalzanlage nach einem der Ansprüche 1 bis 7,
**dadurch gekennzeichnet,**
**daß** die Querteilvorrichtung (28) auch vor dem Tunnelofen (15) einsetzbar ist.

## Claims

1. Hot-rolling plant, consisting of at least one continuous casting plant (1) with a downstream oven (4), following which are a preliminary rolling stand (5) and, by way of a strip lateral guide, a tunnel oven (15) as well as a finishing train, **characterised in that** the strip lateral guide has a length of at least 4 metres, that at least one device recognising the strip edge position is arranged upstream of or associated with the tunnel oven (15), that the tunnel oven (15) comprises at least one cover segment (30 to 32) which can be pivoted on, that a discharge device (29) extending in the longitudinal direction of the tunnel oven (15) is displaceable at least adjacent thereto and that evaluating devices (14) as well as an emergency switching device and/or a cross-cutting device (28) triggering emergency cuts is or are associated with the devices detecting the strip edge positions.

2. Hot-rolling plant according to claim 1, **characterised in that** the strip lateral guides are guide straightedges (12).

3. Hot-rolling mill according to claim 1, **characterised in that** the devices detecting the strip edge position are cameras.

4. Hot-rolling plant according to claim 1, **characterised in that** the cover of the tunnel oven (15) is subdivided and the cover segments (30 to 32) are separately pivotable.

5. Hot-rolling plant according to claim 1, **characterised in that** the cross-cutting device (28) is a torch cutting device.

6. Hot-rolling plant according to claim 1, **characterised in that** the length of the discharge device amounts to only a part length of the tunnel oven (15).

7. Hot-rolling plant according to one of claims 1 to 6, **characterised in that** the cross-cutting device (28) and the discharge device (29) are movable on rails (34, 37, 38).

8. Hot-rolling plant according to one of claims 1 to 7, **characterised in that** the cross-cutting device (28) is positionable at predeterminable use locations.

9. Hot-rolling plant according to one of claims 1 to 7, **characterised in that** the cross-cutting device (28) is also insertable in front of the tunnel oven (15).

## Revendications

1. Installation de laminage à chaud, consistant en au moins une installation de coulée continue (1) comportant un four placé en aval (4), auquel succèdent une cage dégrossisseuse (5) et par le biais d'un guide latéral de bande un four à tunnel (15) ainsi qu'un train finisseur,
**caractérisée en ce que**
le guide latéral de bande présente une longueur d'au moins 4 m, qu'au four à tunnel (15) est associé au moins un dispositif détectant la position des bords de la bande, que le four à tunnel (15) présente au moins un segment de recouvrement pivotable (30 à 32), qu' un dispositif d'extraction (29) s'étendant dans son sens longitudinal est déplaçable au moins près du four à tunnel (15), et qu'aux dispositifs détectant les positions des bords de la bande sont associés des dispositifs d'exploitation (14) ainsi qu'un dispositif de commutation d'urgence et/ou un dispositif à pièce transversale (28) déclenchant des coupes d'urgence.

2. Installation de laminage à chaud selon la revendication 1, **caractérisée en ce que** les guides latéraux de bande sont des règles de guidage (12).

3. Installation de laminage à chaud selon la revendication 1, **caractérisée en ce que** les dispositifs détectant la position des bords de la bande sont des caméras.

4. Installation de laminage à chaud selon la revendication 1, **caractérisée en ce que** le recouvrement du four à tunnel (15) est subdivisé et que les segments de recouvrement (30 à 32) sont pivotables séparément.

5. Installation de laminage à chaud selon la revendication 1, **caractérisée en ce que** le dispositif à pièce transversale (28) est un dispositif de coupage au chalumeau.

6. Installation de laminage à chaud selon la revendication 1, **caractérisée en ce que** la longueur du dispositif d'extraction ne représente qu'une partie de la longueur du four à tunnel (15).

7. Installation de laminage à chaud selon l'une quelconque des revendications 1 à 6, **caractérisée en ce que** le dispositif à pièce transversale (28) et le dispositif d'extraction (29) peuvent se déplacer sur des rails (34, 37, 38).

8. Installation de laminage à chaud selon l'une quelconque des revendications 1 à 7, **caractérisée en ce que** le dispositif à pièce transversale (28) est positionnable à des lieux de mise en oeuvre prédéfinissables.

9. Installation de laminage à chaud selon l'une quelconque des revendications 1 à 7, **caractérisée en ce que** le dispositif à pièce transversale (28) est utilisable aussi devant le four à tunnel (15).
